# EUROPEAN PATENT SPECIFICATION

(11) **EP 0 849 022 B1**
(45) Date of publication and mention of the grant of the patent: **23.04.2003**
(21) Application number: 96120305.6
(22) Date of filing: 18.12.1996
(51) Int. Cl.: B23D 61/12, B23D 61/02

(54) **Saw blade comprising recurring groups of teeth**
Sägeblatt mit sich wiederholenden Zahngruppen
Lame de scie à groupes de dents récurrents

(43) Date of publication of application: 24.06.1998
(73) Proprietor: Kapman AB, 811 81 Sandviken (SE)
(72) Inventor: Hayden, Robert C., Sr., Branford, CN 06045 (US)
(74) Representative: Johansson Webjörn, Ingmari

(56) References cited:
- EP-A- 0 704 269
- WO-A-95/12469
- WO-A-96/29173
- WO-A-97/07920
- DE-A- 3 741 709
- FR-A- 2 649 342
- GB-A- 2 113 144
- GB-A- 2 173 735
- GB-A- 2 257 655
- US-A- 4 179 967

## Description

The present invention is directed to saw blades according to the precharacterizing portion of claim 1 and 8 respectively.

### Background and Summary

Certain saw blades, such as bandsaw blades, are commonly made with recurring variations in the shape, spacing, height, and setting of the teeth, as well as in the width of the saw blade body. By "setting" or "set" it is meant that certain teeth or portions of certain teeth slant to the left or right of a centerline of the blade. Most of these variations serve to improve the properties of the blade for certain specific applications. However, the same variations often decrease the usefulness of the blade for other applications.

Bandsawing, especially bandsawing metal, presents problems not commonly encountered in other sawing methods. The bandsaw blade is usually made thin and narrow, which limits the total feed force that can be applied to force the teeth into the sawn material and makes the blade very flexible. To get a smooth cut, several teeth must be actively engaged in cutting simultaneously, which allows only a relatively small feed force for each of the teeth. Small feed force leads to small cutting depth which, especially for tough materials, means unstable chip formation and excessive wear. Further, the fewer the number of teeth that are actively engaged in cutting simultaneously, the greater the effect of the sudden change in tension when a tooth leaves or enters the cut, and problems associated with self-induced vibrations of the saw blade vertically, laterally, or torsionally may occur. For example, such vibrations tend to lead to uneven cut surfaces and noise.

Variations in tooth shape, especially edge shape, may serve to make the teeth cut several narrow and thick chips rather than fewer thin and wide chips. Formation of numerous narrow and thick chips leads to less wear, less friction against the cut sides, and, usually, better lateral stability than formation of fewer thin and wide chips. However, many blades having teeth with variations in shape require extra manufacturing operations and are, in consequence, expensive to make, or if desired, to resharpen.

Variations in tooth spacing can lower the tendency of self-induced chatter vibrations when sawing thick material, and tends to minimize noise from the sawing operation. There is, however, a tendency for teeth with variations in spacing to become unevenly worn, which may later contribute to transverse forces and crooked cutting.

Tooth height may be varied in various ways to serve different purposes. If straight teeth are longer than others, their side faces tend to guide the blade and produce a straight and narrow cut. However, straight teeth are unlikely to straighten a cut if it starts to veer to one side. If high straight teeth are combined with teeth having variations in setting, multiple narrow thick chips will be cut instead of fewer thin wide chips. This tends to improve the sawing of tough materials, but may leave uneven sides of the cut since only those few teeth set to maximum width shape the final cut surface. In tough material, the combination of high straight teeth and teeth with variations in setting may also be used at slow feed rates so that the high teeth perform the bulk of the actual cutting operation, thus minimizing unstable conditions at small cutting depths. In more easily cut materials, higher feed rates can be used so that the high straight teeth and the teeth with variations in setting are all engaged in cutting. Thus, such a blade is useful for a variety of materials, albeit with a risk of premature wear of the high teeth if much of the work is with tough materials.

WO, A1, 96/29173 representing the closest prior art shows synchronized variable tooth arrangements for saws. A band saw is provided which has a toothed edge comprising a plurality of recurrent groups of teeth. Each group includes an unset leading tooth and a plurality of teeth that are alternately set laterally to opposite sides of the saw. The used tooth heigts and setting patterns are, however, not at optimum regarding premature wear and ability to produce smooth cut surfaces.

It is an object of the present invention to provide a saw blade that may be used for cutting a great variety of materials. It is also an object of the present invention to provide a saw blade that is subject to only limited premature wear. It is also an object of the present invention to provide a tooth setting pattern that is able to produce very smooth cut surfaces. These objects are achieved with a saw blade having the features of claim 1 and 8 respectively.

According to the present invention, a saw blade includes a plurality of recurring groups of teeth, each tooth having a point. Each group comprises one high straight tooth without set, an even number of high set teeth with points at a first level, half of the high set teeth being set to the right and half to the left, an even number, greater than the number of high set teeth, of low set teeth with points at a second level lower than the first level, half of the low set teeth being set to the right and half to the left. Points of each tooth in the group are at a different distance from a point of a corresponding, immediately preceding tooth. All set teeth in the group have the same amount of set. No high tooth is immediately preceded by another high tooth. There are an odd number of low teeth between a high straight tooth and a high set tooth, and there are an even number of low teeth between two set high teeth. Distances from a point of any tooth in the group to a point of a preceding tooth of the same height are different for all teeth in the group. Distances from a point of any set tooth in the group to a point of a preceding set tooth of the same set are different for all set teeth in the group.

Improvements in vibration and stability available with the saw blade according to the present invention are most pronounced in metal bandsaws, where the feed force of the saw blade is high in relation to the blade tension, however, the present invention is also applicable to other types of saw blades, such as hand hacksaws, wood bandsaws, and bow saws.

### Brief Description of the Drawings

The features and advantages of the present invention are well understood by reading the following detailed description in conjunction with the drawings in which like numerals indicate similar elements and in which:
FIG. 1 is a partial view of a saw blade including recurring groups of teeth according to an embodiment of the present invention;
FIG. 2 is a side view of a group of teeth of a saw blade according to an embodiment of the present invention; and
FIG. 3 is a top view of the group of teeth of FIG. 2.

### Detailed Description

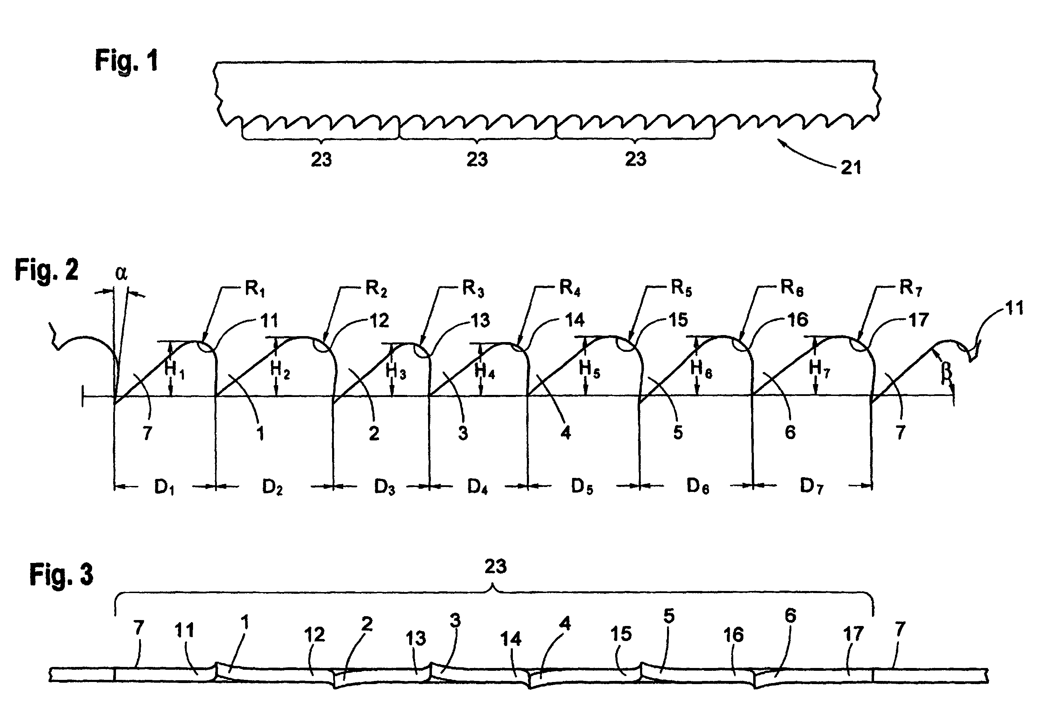

A saw blade 21 according to a preferred embodiment of the present invention is seen in FIG. 1 and has teeth arranged in recurring groups 23 of seven teeth 1-7. As seen in FIG. 2, a group 23 of seven teeth preferably includes three teeth 2, 5, 7 that are high teeth and four teeth 1, 3, 4, 6 that are low teeth. As seen in FIG. 3, one of the high teeth is preferably a raker tooth 7 with no angular set, and all other teeth 1-6 are set an equal amount. Thus six teeth 1-6 out of the seven total teeth cooperate to shape the final cut surfaces of a workpiece.

The following description is with reference to FIGS. 2-3, generally. When tough materials are cut with low vertical feed and low cutting depth per tooth, only the high teeth 2, 5, 7 engage in cutting. To equalize the cutting load on the high teeth during cutting of tough materials at low vertical feed and low cutting depth per tooth, the high teeth are spread out with one or two of the low teeth between each two high teeth. The distance from one high tooth 2, 5, 7 to a preceding high tooth 7, 2, 5 preferably differs within a group 23 of any seven successive teeth to avoid self-induced chatter.

The depth of the gullets 11-17 between the teeth 1-7, respectively, is preferably varied to make more spacious gullets in front of the high teeth 2, 5, 7 to accommodate the larger amounts of chips produced by them. Furthermore, since the high teeth will cut thicker chips than the low teeth even when the vertical feed is so high that all teeth cut, of the radii R₁-R₇ of the gullets 11-17, respectively, it is advantageous that the gullet bottoms R₂, R₅, R₇ in front of the high teeth 2, 5, 7 be larger than the gullet bottoms R₁, R₃, R₄, R₆ in front of the low teeth 1, 3, 4, 6 to facilitate letting the thick chips curl before fracturing.

A group 23 comprises a plurality of teeth 1-7, and their corresponding immediately preceding gullets 11-17, respectively. The group 23 is defined, for purposes of discussion, as beginning after a straight high raker tooth 7 defining the end of a preceding group 23 of teeth. Preferably, the first tooth 1 is a low left set, the second tooth 2 a high right set tooth, the third tooth 3 a low left set tooth, the fourth tooth 4 a low right set, the fifth tooth 5 a high left set tooth, the sixth tooth 6 a low right set tooth and the seventh tooth 7 a high straight tooth without set. Of course, other arrangements, such as a mirror image having teeth arranged in the manner of low right, high left, low right, low left, high right, low left and high straight, would be equally useful. There are preferably an odd number of low teeth between the high straight tooth 7 and the high set teeth 2 and 5. There are preferably an even number of low teeth between the set high teeth 2 and 5. Distances from a point of any tooth in the group to a point of a preceding tooth of the same height are preferably different for all teeth in the group.

To avoid self-induced chatter, the distance from the point of one tooth to the preceding tooth, i.e., the pitch, is varied in such a way that, within any group of successive teeth, where each group preferably includes seven teeth, no pitches are equal, and no distances between two teeth set in the same direction are equal. According to a presently preferred embodiment, tooth shape and distance to the preceding tooth, in millimeters, for the teeth of a recurring group are: D₁ 5.1 mm; D₂ 6.05 mm; D₃ 4.8 mm; D₄ 4.91 mm; D₅ 5.68 mm; D₆ 5.6 mm; D₇ 5.96 mm. Gullet heights H₁-H₇, i.e., the height of the point of the tooth from the bottom of the gullet, for each of the gullets preceding each of the teeth 1-7 are preferably H₁ 2.650 mm; H₂ 2.910 mm; H₃ 2.540 mm; H₄ 2.600 mm; H₅ 2.820 mm; H₆ 2.750 mm; and H₇ 2.860 mm. Radii of the gullet bottoms R₁-R₇ are preferably R₁ 1.219 mm; R₂ 1.795 mm; R₃ 1.105 mm; R₄ 1.199 mm; R₅ 1.615 mm; R₆ 1.481 mm; and R₇ 1.775 mm. Heights of the high teeth 2, 5, and 7 are preferably 0.075 mm higher than heights of the low teeth 1, 3, 4, and 6. All of the teeth 1-7 preferably have a rake angle α of 6° and a relief angle β of 37°.

All high teeth preferably have their points at one level to minimize differences in wear rates during cutting at low feed rates and thereby extend the useful life of the blade, and all low teeth preferably have their points at another level. All set teeth preferably have the same amount of set to facilitate forming a smooth surface on the workpiece.

It is, of course, possible to embody the invention in specific forms other than those described above without departing from the scope of the claims. The embodiments shown are merely illustrative and should not be considered restrictive in any way. The scope of the present invention is given in the appended claims, rather than the preceding description, and all variations and equivalents which fall within the range of the claims are intended to be embraced therein.

## Claims

1. A saw blade (21), comprising:
a plurality of recurring groups (23) of teeth (1-7), each tooth having a point;
each group (23) comprising
one high straight tooth (7) without set,
an even number of high set teeth (2, 5) with points at a first level, half of the high set teeth being set to the right and half to the left,
an even number, greater than the number of high set teeth, of low set teeth (1, 3, 4, 6) with points at a second level lower than the first level, half of the low set teeth being set to the right and half to the left, and
all set teeth (1-6) in the group (23) having the same amount of set, and there being an even number of low teeth (1, 3, 4, 6) between two set high teeth (2, 5),
**characterized in that**
points of each tooth (1-7) in the group (23) being at a different distance (D) from a point of a corresponding, immediately preceding tooth (1-7) than a distance between a point of any other tooth (1-7) in the group (23) and a point of a corresponding, immediately preceding tooth (1-7) and
no high tooth (2, 5, 7) being immediately preceded by another high tooth (2, 5, 7), there being an odd number of low teeth (1, 3, 4, 6) between a high straight tooth (7) and a high set tooth (2, 5), distances (D) from a point of any tooth (1-7) in the group (23) to a point of a preceding tooth (1-7) of the same height being different for all teeth in the group (23), distances (D) from a point of any set tooth (1-6) in the group (23) to a point of a preceding set tooth (1-6) of the same set being different for all set teeth in the group (23).

2. The saw blade according to claim 1, wherein each group (23) includes one high straight tooth (7), two high set teeth (2, 5), and four low set teeth (1, 3, 4, 6).

3. The saw blade according to claim 1, wherein relief angles for each tooth (1-7) are the same.

4. The saw blade according to claim 1 and/or 3, wherein rake angles for each tooth (1-7) are the same.

5. The saw blade according to claim 1, wherein gullets (11-17) are formed between adjacent teeth (1-7), each of the gullets (11-17) having a radiused bottom, radii at the bottom of the gullets (11-17) all being different from one another.

6. The saw blade according to claim 1, wherein gullets (11-17) are formed between adjacent teeth (1-7), each of the gullets (11-17) having a gullet height from a bottom of the gullet (11-17) to a point of a corresponding tooth (1-7), the gullet heights all being different from one another.

7. The saw blade according to claim 1, wherein each recurring group (23) of teeth (1-7) includes seven teeth.

8. A saw blade (21), comprising:
a plurality of recurring groups (23) of teeth (1-7), each group (23) of teeth (1-7) including an unset high tooth (7), an even number of high set teeth (2, 5) with points at a first level, half of the high set teeth being set to the right and half to the left, an even number, greater than the number of high set teeth, of low set teeth (1, 3, 4, 6) with points at a second level lower than the first level, half of the low set teeth being set to the right and half to the left,
**characterized in that**
a distance (D) from any tooth (1-7) to a preceding tooth (1-7) in the group (23) of the same height being different than a distance (D) from any other tooth (1-7) to a preceding tooth (1-7) in the group (23) of the same height,
a distance (D) from any tooth (1-7) to a preceding tooth (1-7) in the group (23) being different than a distance from any other tooth (1-7) to a preceding tooth (1-7) in the group (23), and
there being an odd number of low set teeth (1, 3, 4, 6) between the high unset tooth (7) and a high set tooth (2, 5).

9. The saw blade according to claim 8, wherein distance from any tooth (1-7) to a preceding tooth (1-7) in the group (23) of the same set are different.

10. The saw blade according to claim 8, wherein each group (23) includes one high straight tooth (7), two high set teeth (2, 5), and four low set teeth (1, 3, 4, 6).

11. The saw blade according to claim 8, wherein there are an even number of low set teeth (1, 3, 4, 6) between any two high set teeth (2, 5).

12. The saw blade according to claim 8, wherein all of the high set teeth (2, 5) and all of the low set teeth (1, 3, 4, 6) have the same amount of set.

13. The saw blade according to claim 8, wherein relief angles for each tooth (1-7) are the same.

14. The saw blade according to claim 8 and/or 13, wherein rake angles for each tooth (1-7) are the same.

15. The saw blade according to claim 9, wherein gullets (11-17) are formed between adjacent teeth (1-7), each of the gullets (11-17) having a radiused bottom, radii at the bottom of the gullets (11-17) all being different from one another.

16. The saw blade according to claim 9, wherein gullets (11-17) are formed between adjacent teeth (1-7), each of the gullets (11-17) having a gullet height from a bottom of the gullet (11-17) to a point of a corresponding tooth (1-7), the gullet heights for each gullet (11-17) within the group (23) all being different.

## Patentansprüche

1. Sägeblatt (21) mit:
einer Vielzahl von sich wiederholenden Gruppen (23) von Zähnen (1-7), wobei jeder Zahn eine Spitze hat;
wobei jede Gruppe (23) aufweist:
einen hohen geraden Zahn (7) ohne Schränkung,
eine gerade Zahl von hohen geschränkten Zähnen (2, 5) mit Spitzen auf einer ersten Höhe, wobei die Hälfte der hohen geschränkten Zähne nach rechts und die Hälfte nach links geschränkt ist,
eine gerade Anzahl von niedrigen geschränkten Zähnen (1, 3, 4, 6), wobei die gerade Zahl größer ist als die Zahl der hohen geschränkten Zähne und die niedrigen geschränkten Zähne Spitzen auf einer zweiten Höhe haben, die niedriger ist als die erste Höhe, wobei die Hälfte der unteren geschränkten Zähne nach rechts und die Hälfte nach links geschränkt ist, und wobei
alle geschränkten Zähne (1-6) in der Gruppe (23) denselben Schränkungsgrad haben und es eine gerade Anzahl von niedrigen Zähnen (1, 3, 4, 6) zwischen zwei geschränkten hohen Zähnen (2, 5) gibt,
**dadurch gekennzeichnet, daß**
Spitzen jedes Zahnes (1-7) in der Gruppe (23) in einem anderen Abstand (D) von einer Spitze eines entsprechenden, unmittelbar vorausgehenden Zahns (1-7) als einem Abstand zwischen einer Spitze irgendeines anderen Zahns (1-7) in der Gruppe (23) und einer Spitze eines entsprechenden, unmittelbar vorausgehenden Zahns (1-7) angeordnet sind und daß
keinem hohen Zahn (2, 5, 7) unmittelbar ein anderer hoher Zahn (2, 5, 7) vorgeschaltet ist, es eine ungerade Anzahl von niedrigen Zähnen (1, 3, 4, 6) zwischen einem hohen geraden Zahn (7) und einem hohen geschränkten Zahn (2, 5) gibt, wobei Abstände (D) von einer Spitze irgendeines Zahns (1-7) in der Gruppe (23) zu einer Spitze eines vorausgehenden Zahns (1-7) derselben Höhe für alle Zähne in der Gruppe (23) unterschiedlich sind und Abstände (D) von einer Spitze irgendeines geschränkten Zahns (1-6) in der Gruppe (23) zu einer Spitze eines vorhergehenden geschränkten Zahns (1-6) derselben Schränkung für alle geschränkten Zähne in der Gruppe (23) unterschiedlich sind.

2. Sägeblatt nach Anspruch 1, wobei jede Gruppe (23) einen hohen geraden Zahn (7), zwei hohe geschränkte Zähne (2, 5) und vier niedrige geschränkte Zähne (1, 3, 4, 6) aufweist.

3. Sägeblatt nach Anspruch 1, wobei Anstellwinkel für jeden Zahn (1-7) dieselben sind.

4. Sägeblatt nach Anspruch 1 und/oder 3, wobei Spanwinkel für jeden Zahn (1-7) dieselben sind.

5. Sägeblatt nach Anspruch 1, wobei Zahnlücken (11-17) zwischen benachbarten Zähnen (1-7) gebildet sind, jede Zahnlücke (11-17) einen mit einem Radius versehenen Grund hat und die Radien am Grund der Zahnlücken (11-17) sich alle voneinander unterscheiden.

6. Sägeblatt nach Anspruch 1, wobei Zahnlücken (11-17) zwischen benachbarten Zähnen (1-7) gebildet sind, jede der Zahnlücken (11-17) eine Zahnlückenhöhe von einem Grund der Zahnlücke (11-17) zu einer Spitze eines entsprechenden Zahns (1-7) hat und die Zahnlükkenhöhen sich alle voneinander unterscheiden.

7. Sägeblatt nach Anspruch 1, wobei jede sich wiederholende Gruppe (23) von Zähnen (1-7) sieben Zähne aufweist.

8. Sägeblatt (21) mit
einer Vielzahl von sich wiederholenden Gruppen (23) von Zähnen (1-7), wobei jede Gruppe (23) von Zähnen (1-7) einen ungeschränkten hohen Zahn (7), eine gerade Zahl von hohen geschränkten Zähnen (2, 5) mit Spitzen auf einer ersten Höhe, wobei die Hälfte der hohen geschränkten Zähne nach rechts und die Hälfe nach links geschränkt ist, und eine gerade Zahl von niedrigen geschränkten Zähnen (1, 3, 4, 6) aufweist, wobei die gerade Zahl größer ist als die Zahn der hohen geschränkten Zähne und wobei die niedrigen geschränkten Zähne Spitzen auf einer zweiten Höhe haben, die niedriger ist als die erste Höhe, wobei die Hälfte der niedrigen geschränkten Zähne nach rechts und die Hälfte nach links geschränkt ist,
**dadurch gekennzeichnet, daß**
ein Abstand (D) von irgendeinem Zahn (1-7) zu einem vorhergehenden Zahn (1-7) in der Gruppe (23) derselben Höhe unterschiedlich ist von einem Abstand (D) von irgendeinem anderen Zahn (1-7) zu einem vorhergehenden Zahn (1-7) in der Gruppe (23) derselben Höhe,
ein Abstand (D) von irgendeinem Zahn (1-7) zu einem vorhergehenden Zahn (1-7) in der Gruppe (23) unterschiedlich ist von einem Abstand von irgendeinem anderen Zahn (1-7) zu einem vorhergehenden Zahn (1-7) in der Gruppe (23) und daß
es ein ungerade Anzahl niedriger geschränkter Zähne (1, 3, 4, 6) zwischen dem hohen ungeschränkten Zahn (7) und einem hohen geschränkten Zahn (2, 5) gibt.

9. Sägeblatt nach Anspruch 8, wobei der Abstand von irgendeinem Zahn (1-7) zu einem vorhergehenden Zahn (1-7) in der Gruppe (23) derselben Schränkung unterschiedlich ist.

10. Sägeblatt nach Anspruch 8, wobei jede Gruppe (23) einen hohen geraden Zahn (7), zwei hohe geschränkte Zähne (2, 5) und vier niedrige geschränkte Zähne (1, 3, 4, 56) aufweist.

11. Sägeblatt nach Anspruch 8, wobei es eine gerade Anzahl von niedrigen geschränkten Zähnen (1, 3, 4, 6) zwischen zwei hohen geschränkten Zähnen (2, 5) gibt.

12. Sägeblatt nach Anspruch 8, wobei alle hohen geschränkten Zähne (2, 5) und alle niedrigen geschränkten Zähne (1, 3, 4, 6) denselben Schränkungsgrad haben.

13. Sägeblatt nach Anspruch 8, wobei der Anstellwinkel für jeden Zahn (1-7) derselbe ist.

14. Sägeblatt nach Anspruch 8 und/oder 13, wobei der Spanwinkel für jeden Zahn (1-7) derselbe ist.

15. Sägeblatt nach Anspruch 9, wobei Zahnlücken (11-17) zwischen benachbarten Zähnen (1-7) gebildet sind, jede Zahnlücke (11-17) einen mit einem Radius versehenen Grund hat und die Radien am Grund der Zahnlücken (11-17) sich alle voneinander unterscheiden.

16. Sägeblatt nach Anspruch 9, wobei die Zahnlücken (11-17) zwischen benachbarten Zähnen (1-7) gebildet sind, jede der Zahnlücken (11-17) eine Zahnlückenhöhe von einem Grund der Zahnlücke (11-17) zu einer Spitze eines entsprechenden Zahns (1-7) hat und die Zahnlückenhöhen für jede Zahnlücke (11-17) innerhalb der Gruppe (23) alle anders sind.

## Revendications

1. Lame de scie (21), comprenant :
une pluralité de groupes récurrents (23) de dents (1 à 7), chaque dent ayant une pointe,
chaque groupe (23) comprenant :
une dent longue droite (7) non avoyée,
un nombre pair de dents longues avoyées (2, 5) avec des pointes à un premier niveau, la moitié des dents hautes avoyées étant avoyée(s) vers la droite et la moitié vers la gauche,
un nombre pair, supérieur au nombre de dents longues avoyées, de dents courtes avoyées (1, 3, 4, 6) avec des pointes à un second niveau inférieur au premier niveau, la moitié des dents courtes avoyées étant avoyée(s) vers la droite et la moitié vers la gauche, et
toutes les dents avoyées (1 à 6) dans le groupe (23) étant avoyées selon la même inclinaison, et il y a un nombre pair de dents courtes (1, 3, 4, 6) entre deux dents longues avoyées (2, 5),
**caractérisée par le fait que**
les pointes de chaque dent (1 à 7) dans le groupe (23) sont à une distance (D) d'une pointe d'une dent correspondante immédiatement précédente (1 à 7), différente d'une distance entre une pointe de toute autre dent (1 à 7) dans le groupe (23) et une pointe d'une dent correspondante immédiatement précédente (1 à 7) et
aucune dent longue (2, 5, 7) n'est précédée immédiatement par une autre dent longue (2, 5, 7), il y a un nombre impair de dents courtes (1, 3, 4, 6) entre une dent longue droite (7) et une dent longue avoyée (2, 5), les distances (D) d'une pointe de toute dent (1 à 7) dans le groupe (23) à une pointe d'une dent précédente (1 à 7) de même longueur étant différentes pour toutes les dents dans le groupe (23), les distances (D) d'un pointe de toute dent avoyée (1 à 6) dans le groupe (23) à une pointe d'une dent avoyée précédente (1 à 6) avoyée de même étant différentes pour toutes les dents avoyées dans le groupe (23).

2. Lamé de scie selon la revendication 1, dans laquelle chaque groupe (23) comprend une dent longue droite (7), deux dents longues avoyées (2, 5), et quatre dents courtes avoyées (1, 3, 4, 6).

3. Lame de scie selon la revendication 1, dans laquelle des angles de dégagement de chaque dent (1 à 7) sont les mêmes.

4. Lame de scie selon la revendication 1 et/ou 3, dans laquelle des angles d'attaque de chaque dent (1 à 7) sont les mêmes.

5. Lame de scie selon la revendication 1, dans laquelle des passages (11 à 17) sont formés entre dents adjacentes (1 à 7), chacun des passages (11 à 17) ayant un fond arrondi, les rayons au fond des passages (11 à 17) étant tous différents entre eux.

6. Lame de scie selon la revendication 1, dans laquelle des passages (11 à 17) sont formés entre dents adjacentes (1 à 7), chacun des passages (11 à 17) ayant une hauteur de passage depuis un fond du passage (11 à 17) jusqu'à une pointe d'une dent correspondante (1 à 7), les hauteurs des passages étant toutes différentes entre elles.

7. Lame de scie selon la revendication 1, dans laquelle chaque groupe récurrent (23) de dents (1 à 7) comprend sept dents.

8. Lame de scie (21), comprenant :
une pluralité de groupes récurrents (23) de dents (1 à 7), chaque groupe de dents (1 à 7) comprenant une dent longue droite non avoyée (7), un nombre pair de dents longues avoyées (2, 5) avec des pointes à un premier niveau, la moitié des dents hautes avoyées étant avoyée(s) vers la droite et la moitié vers la gauche, un nombre pair, supérieur au nombre de dents longues avoyées, de dents courtes avoyées (1, 3, 4, 6) avec des pointes à un second niveau inférieur au premier niveau, la moitié des dents courtes avoyées étant avoyées vers la droite et la moitié vers la gauche,
**caractérisée par le fait que**
une distance (D) de toute dent (1 à 7) à une dent précédente (1 à 7) dans le groupe (23) à même hauteur est différente d'une distance (D) de toute autre dent (1 à 7) à une dent précédente (1 à 7) dans le groupe (23), à même hauteur,
une distance (D) de toute dent (1 à 7) à une dent précédente (1 à 7) dans le groupe (23) étant différente d'une distance de toute autre dent (1 à 7) à une dent précédente (1 à 7) dans le groupe (23), et
il y a un nombre impair de dents courtes avoyées (1, 3, 4, 6) entre la dent longue non avoyée (7) et une dent longue avoyée (2, 5).

9. Lame de scie selon la revendication 8, dans laquelle les distances de toute dent (1 à 7) à une dent précédente (1 à 7), dans le groupe (23) avoyé de même, sont différentes.

10. Lame de scie selon la revendication 8, dans laquelle chaque groupe (23) comprend une dent longue droite (7), deux dents longues avoyées (2, 5), et quatre dents courtes avoyées (1, 3, 4, 6).

11. Lame de scie selon la revendication 8, dans laquelle il y a un nombre pair de dents courtes avoyées (1, 3, 4, 6) entre deux quelconques des dents longues avoyées (2, 5).

12. Lame de scie selon la revendication 8, dans laquelle toutes les dents longues avoyées (2, 5) et toutes les dents courtes avoyées (1, 3, 4, 6) sont avoyées selon la même inclinaison.

13. Lame de scie selon la revendication 8, dans laquelle des angles de dégagement de chaque dent (1 à 7) sont les mêmes.

14. Lame de scie selon la revendication 8 et/ou 13, dans laquelle des angles d'attaque de chaque dent (1 à 7) sont les mêmes.

15. Lame de scie selon la revendication 9, dans laquelle des passages (11 à 17) sont formés entre dents adjacentes (1 à 7), chacun des passages (11 à 17) ayant un fond arrondi, les rayons de fond des passages (11 à 17) étant tous différents entre eux.

16. Lame de scie selon la revendication 9, dans laquelle des passages (11 à 17) sont formés entre dents adjacentes (1 à 7), chacun des passages (11 à 17) ayant une hauteur de passage depuis un fond du passage (11 à 17) jusqu'à une pointe d'une dent correspondante (1 à 7), les hauteurs des passages de chaque passage (11 à 17) dans le groupe (23) étant toutes différentes entre elles.
